# EUROPEAN PATENT SPECIFICATION

(11) **EP 3 037 249 B1**
(45) Date of publication and mention of the grant of the patent: **21.03.2018**
(21) Application number: 15200675.5
(22) Date of filing: 17.12.2015
(51) Int. Cl.: B29D 30/24, B29D 30/26, B29D 30/42

(54) **SLEEVELESS TIRE BUILDING DRUM**
MANSCHETTENLOSE REIFENBAUTROMMEL
TAMBOUR SANS MANCHON SERVANT À FABRIQUER UN PNEU

(30) Priority: 23.12.2014 US 201462095830 P; 27.10.2015 US 201514924111
(43) Date of publication of application: 29.06.2016
(73) Proprietor: The Goodyear Tire & Rubber Company, Akron, Ohio 44316 (US)
(72) Inventor: ROA GUZMAN, Ivan Marcos, Santiago (CL)
(74) Representative: Kutsch, Bernd

(56) References cited:
- EP-A1- 1 621 327
- EP-A1- 1 674 250
- EP-A1- 2 698 244
- WO-A1-2014/097100
- DE-A1-102004 008 273

## Description

### Field of the Invention

The invention relates to a tire building drum, more particularly to a tire building drum with no center sleeve.

### Background of the Invention

The manufacture of tires typically involves a tire building drum wherein numerous tire components are applied to the drum in sequence, forming a cylindrical shaped tire carcass. This stage of the tire building process is commonly referred to as the "first stage" of the tire building process. The tire carcass is then typically removed from the tire building drum and sent to a second stage, expandable tire shaping drum where the carcass is expanded into a toroidal shape for receipt of the remaining components of the tire such as the belt package and a rubber tread. The completed toroidally shape unvulcanized tire carcass or green tire is then removed from the second stage drum and subsequently molded and vulcanized into a finished tire.

The prior art process thus requires two tire building drums and the transfer of the carcass from one drum to the other. Further, a problem often arises in precisely locating and anchoring the tire beads on the unvulcanized tire carcass, especially during the transportation of the tire beads from the first stage drum to the second stage drum. Variations in bead positioning can result in ply distortion in the tire.

Tire manufacturers have recently begun moving towards the utilization of a single tire building drum, for both the first and second stage tire building. This requires that the tire building drum be capable of axial expansion and contraction as well as radial expansion/contraction. Further, it is important to maintain a positive bead lock during the entire tire building process, including the tire shaping, so that the ply cord length is maintained, resulting in good tire uniformity.

Tire manufacturers typically use a flexible cylindrical rubberized center sleeve as the outermost element on tire building drums. The center sleeve functions as the surface of application and point of fixation for the innermost component of the tire (innerliner). The section where the centersleeve wraps around the "shoulder" of the radially expansible segments also serves as a pneumatic seal against the bead area of the green tire, enabling inflation (shaping) of the green tire in the full-stage tire building process. The centersleeve also typically has a series of holes for providing a vacuum to secure the innerliner to the drum and the air to shape the green tire.

It is desired to remove the center sleeve because it is generally width specific. Removing the center sleeve allows a greater increase in manufacturing flexibility, as many different tire codes can be run on the same drum without the need to change parts. This results in increased machine uptime and a substantial reduction in drum inventory requirements. With the sleeveless modification, a special set of drum segments are needed so that the leading edge of the first tire component can be picked up by the drum. However, due to the removal of the center sleeve, it is difficult to use vacuum to efficiently pick up and secure the leading edge of a tire component. This is due to the lack of resiliency around the vacuum holes. Thus an improved tire building drum is desired which no longer requires a center sleeve, and has sufficient vacuum to adhere the first tire component to the drum without dimpling the tire component.

EP-A-2 698 244 describes a tire building drum in accordance with the preamble of claim 1.

### Summary of the Invention

The invention relates to a tire building drum in accordance with claim 1.

Dependent claims refer to preferred embodiments of the invention.

### Definitions

"Axial" and "axially" means the lines or directions that are parallel or aligned with the longitudinal axis of rotation of the tire building drum.

"Circumferential" means lines or directions extending along the perimeter of the surface of the tire building drum or the annular tire tread perpendicular to the axial direction.

"Radial" and "radially" mean directions radially toward or away from the axis of rotation of the tire building drum.

### Brief Description of the Drawings

The invention will be described by way of example and with reference to the accompanying drawings in which:
Figure 1 is a front cross-sectional view of a tire building drum of the present invention shown having two shoulder sleeves mounted on the crown portion of the drum.
Figure 2 is a close-up cross-sectional view of the tire building drum of Figure 1 showing the drum in the radially expanded position.
Figure 3 is a close up cross-sectional view of a tire building drum in the expanded high crown condition shown with a prior art centersleeve.
Figure 4 is a close up cross-sectional view of the tire building drum in the expanded high crown condition shown with the shoulder sleeves of the present invention.
Figure 5 is a front view of the center section of the tire building drum in the axially contracted position.
Figure 6 is a front view of the center section of the tire building drum in the axially expanded position.
Figure 7 is a perspective view of the center section of the tire building drum shown in the axially contracted position.
Figure 8 is a perspective view of the center section of the tire building drum shown in the axially contracted position and radially expanded position.
Figure 9 is a perspective view of the center section in the axially expanded position of the tire building drum with the shoulder seals removed.
Figure 10 is a cross sectional view of half of the center section of the tire building drum.
Figure 11 is a top view of a single center section segment.
Figure 12 is a bottom view of the single center section segment of Fig. 11.

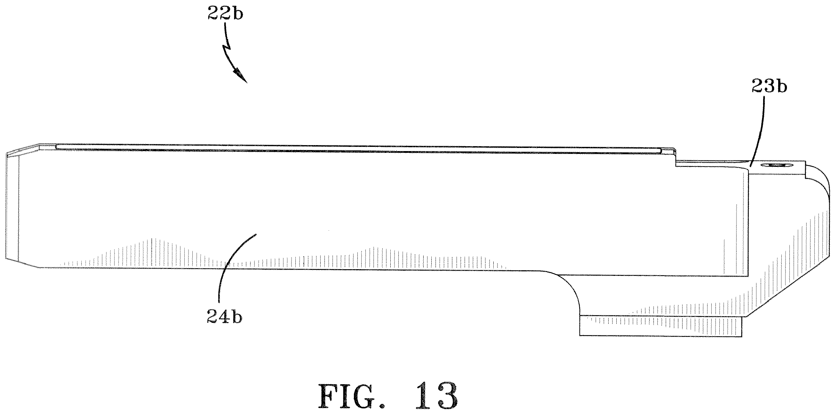

Figure 13 is a side view of the single center section segment of Fig. 11.
Figure 14 is a perspective view of a splice bar segment (comparative example).
Figure 15 is a center section with a splice bar assembly in accordance with the present invention.
Figure 16 is a perspective view of a splice bar assembly of the present invention.
Figure 17 is a cross-sectional view of the splice bar assembly of the present invention.
Figure 18 is an end view of the splice bar assembly of Figure 17.
Figure 19 illustrates the splice bar assembly in the axially retracted position.
Figure 20a illustrates the right hand frame of the splice bar assembly and Figure 20b illustrates the left hand frame of the splice bar assembly.

### Detailed Description of Example Embodiments of the Invention

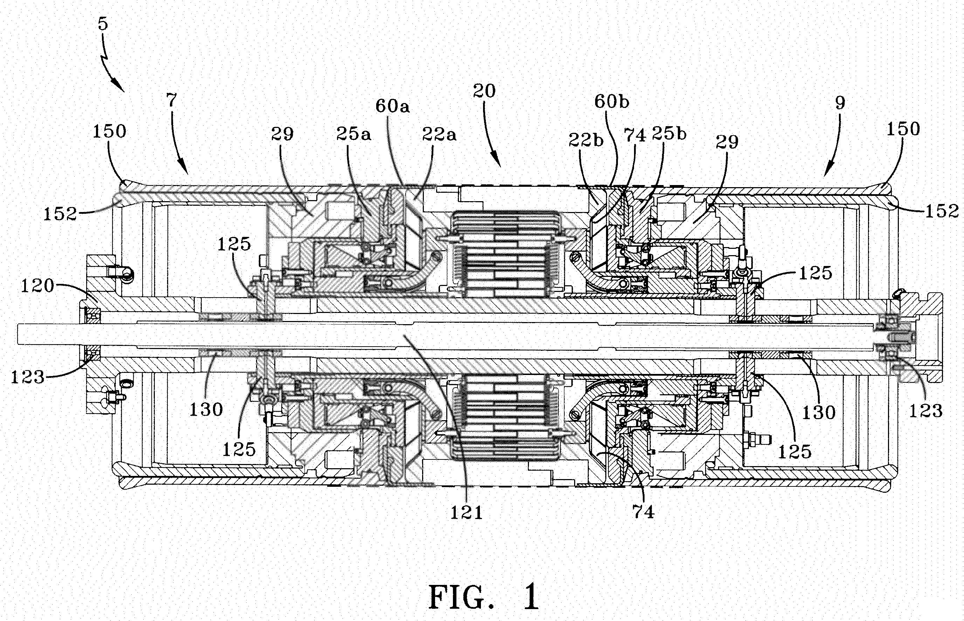

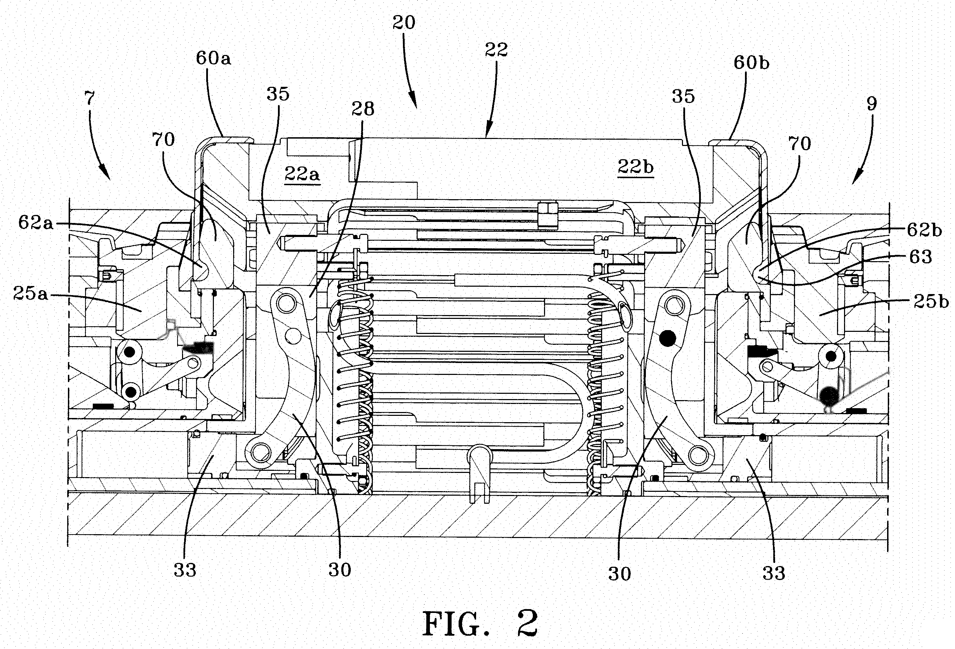

With reference to Figures 1 through 2, an exemplary tire building drum 5 of the present invention is illustrated. As shown more particularly in Figure 1, the tire building drum 5 has a left hand side 7 and a right hand side 9 joined together by a center section 20. The center section is further divided into a right hand side 22b and a left hand side 22a, which are both axially and radially movable, as described in more detail, below. Adjacent the center section 20 are first and second bead locking mechanisms 25a, 25b, which are also radially movable as shown in Figure 2. Adjacent the bead locking mechanisms are first and second shoulder sections 29. Both the bead locking mechanisms and the shoulder sections are axially movable. Thus, both the left hand side and the right hand side of the drum are axially movable. These components are described in more detail, below.

### Center Section

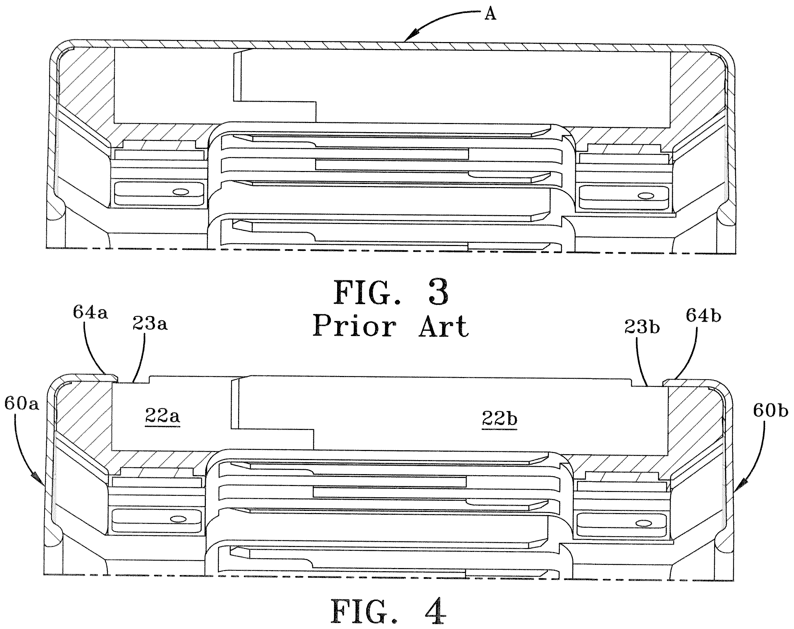

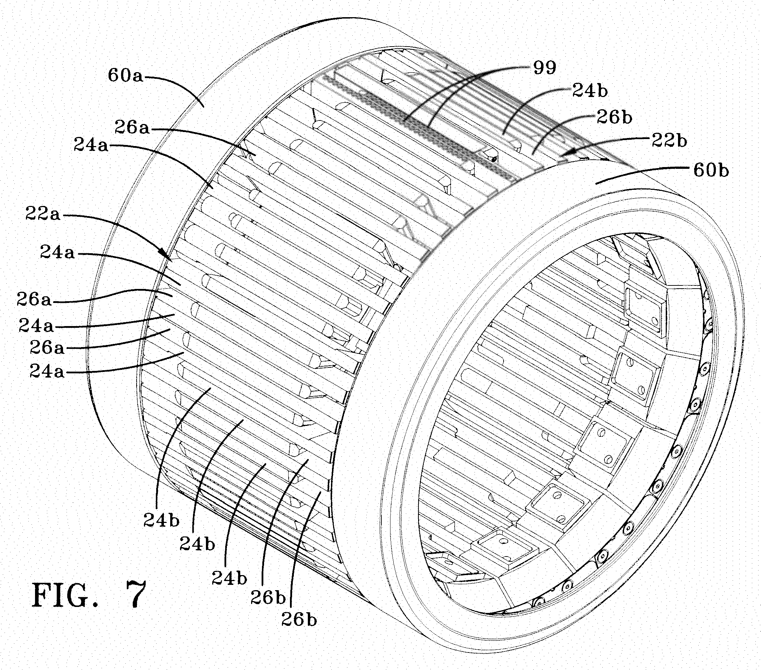

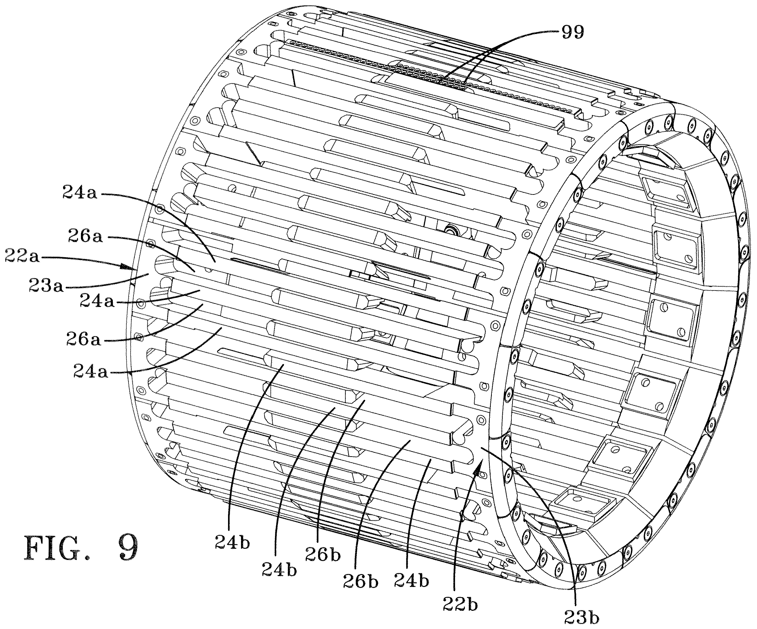

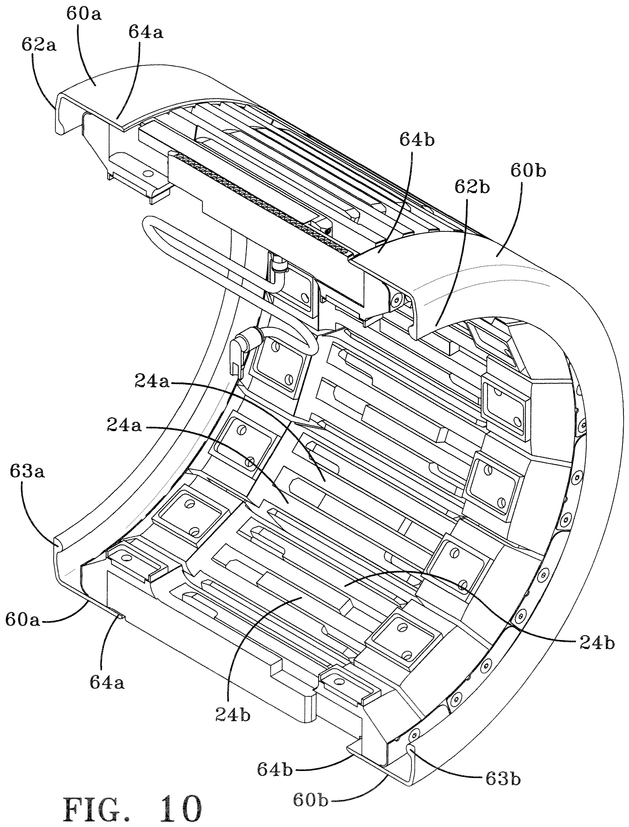

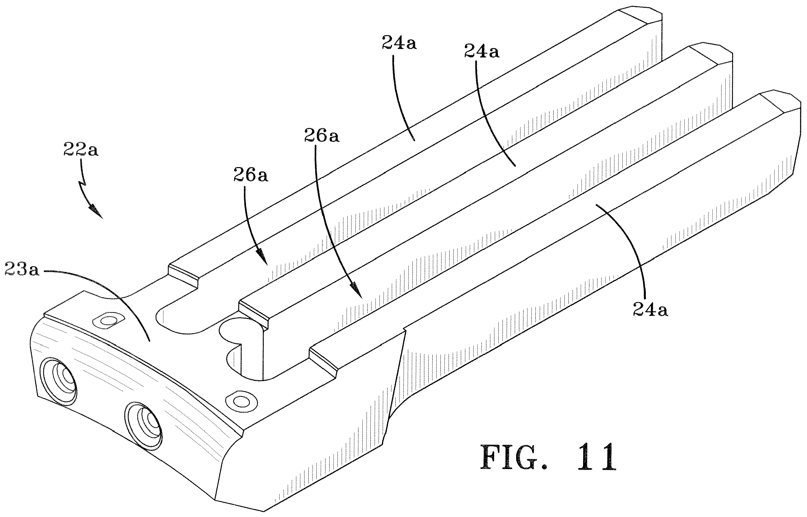

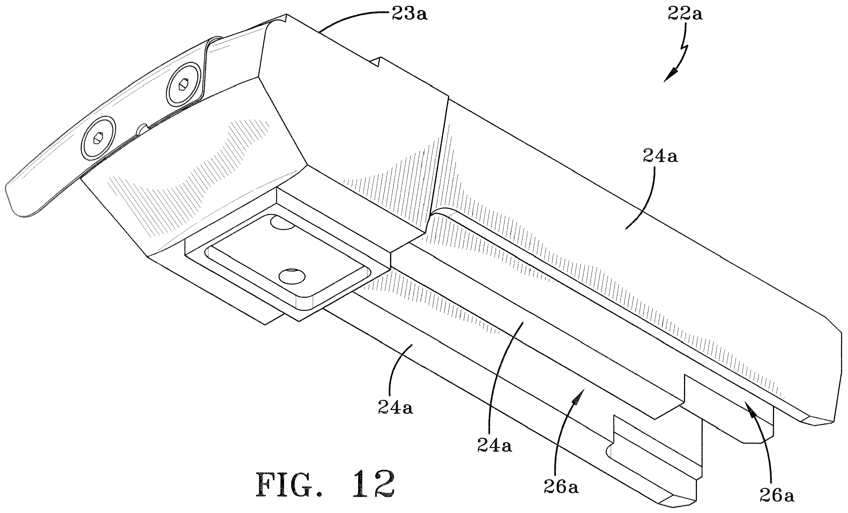

The center section 20 of the tire building drum as shown in Figures 2-10 comprises a plurality of center segments 22a, 22b located about the outer circumference of the drum. Each of the center segments may be further split into a left hand side 22a and a right hand side 22b, as shown in Figures 4-12 (although not required). As shown in Figure 11, the left hand side center segment 22a has one or more finger like projections 24a, with recesses 26a. The right hand side is the mirror opposite. As shown in Figure 10, left hand center segment 22a has for instance three finger-like projections 24a which are slidably received in three elongate slots 26b in an interdigitated or interlocked manner. Likewise, right hand center segment 22b has for instance three finger like projections 24b which are slidably received in three opposed elongate slots 26a. The center segments 22a, 22b thus cooperate with each other to axially expand or contract as the fingers slide within the recesses.

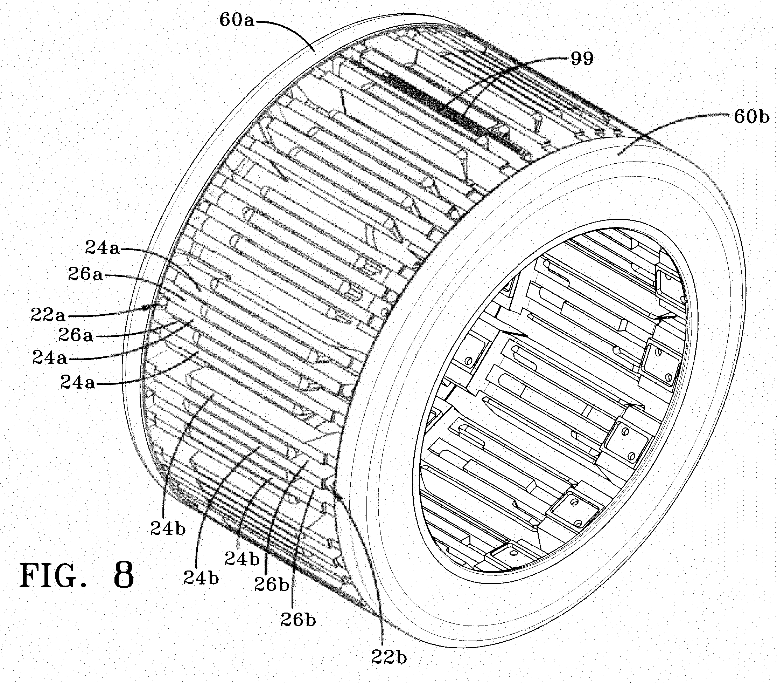

The center section 20 may also radially expand as shown in Figure 8. The center section 20 can radially expand in the range of from 20 to 50 mm. As each center segment 22a, 22b radially expands, the gap between the center segments increases. Provided within each center segment half 22a, 22b is a radially oriented piston chamber 28. Received in each chamber 28 is a preferably elbow-shaped linkage 30 connected to a common actuator (not shown), such as a piston 33. A control system (not shown) actuates the pistons 33, causing linkage 30 to slide from the retracted position (not shown) to the actuated position shown in Figure 3. When the linkages 30 are actuated, the linkages push the center segments radially outward into the high crown position as shown in Figure 3.

### Shoulder Seals

Figure 3 illustrates a typical tire building drum having a center section that is completely covered by a cylindrically shaped center sleeve A. The center sleeve A typically comprises thick rubber. The tire building drum of the present invention does not have a center sleeve, nor a sleeve or any type of rubber component that extends from one end of the center section to the other end, nor a sleeve that is located in the center of the center section of the drum. The tire building drum of the present invention has eliminated the center sleeve, and includes a first and second shoulder seal 60a, 60b. The purpose of the shoulder seals 60a, 60b is to maintain the pneumatic seal between the bead of the green tire and the tire building drum, enabling inflation and shaping of the green tire in the full stage tire building process. The first and second shoulder seal 60a, 60b are located on the axially outer ends of the segments 22a, 22b forming the center section. Each center seal preferably has an overall annular shape, having a first end 62a, 62b which is secured in seal clamps 70 located adjacent the center section segments. Preferably the first ends 62a, 62b of the seal have an outer bead projection 63 for mating reception with inner protrusion of the seal clamp. The shoulder seals each further comprise a second end 64a, 64b that is a free or unconstrained end. Thus, the shoulder seals are not subject to axial tension which substantially reduced the life of the center sleeve. The free end 64a, 64b rests on the outer surface 23a, 23b (Fig. 11) of the center segments 22a, 22b, and will slide relative to the center segments when the drum is radially expanded. The outer surface 23a, 23b has a smaller outer diameter than the center of the center section, forming a radial step so that when the shoulder seals are mounted, the shoulder seals form a flush surface with the center section of the drum.

Each shoulder seal may be cast in a mold (not shown) in the desired shape or as shown in Figure 4. Preferably each seal is cast or formed in a "L" shape as shown. The seal may be made from rubber, polyurethane, or other flexible material.

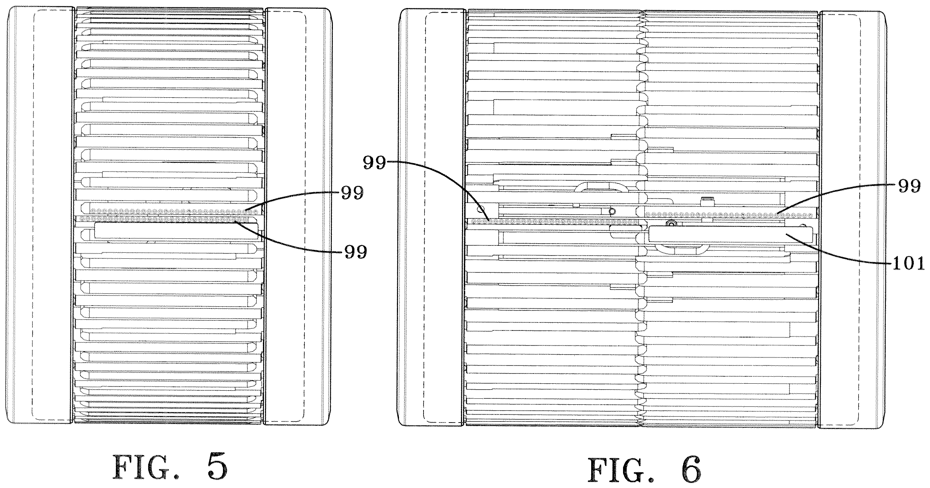

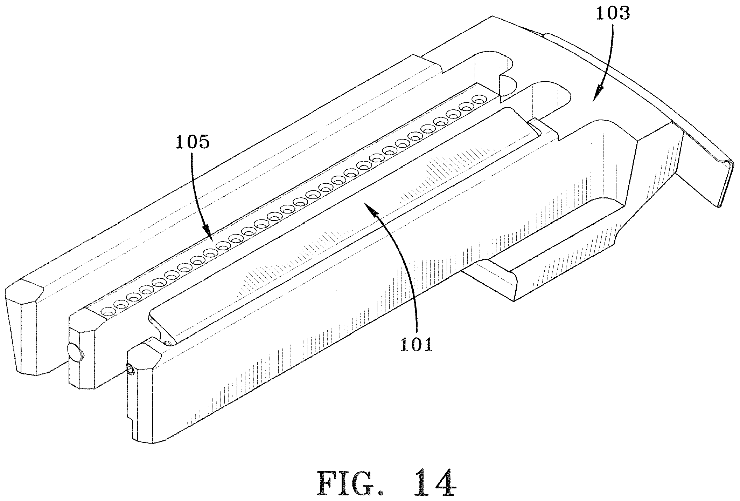

The segments have been redesigned so that the innerliner is applied directly to the outer radial surface of the segments instead of the center sleeve. At least one finger of a segment (see Figures 5-7) is equipped with one or more vacuum holes 99 to enable fixing the leading edge of the innerliner to the drum using vacuum. Preferably, a finger of each of a left segment and a right segment is equipped with vacuum holes. Figure 14 illustrates a special segment 103 with a splice bar plate 101 as comparative example. The special segment illustrates a finger 105 having a plurality of vacuum holes.

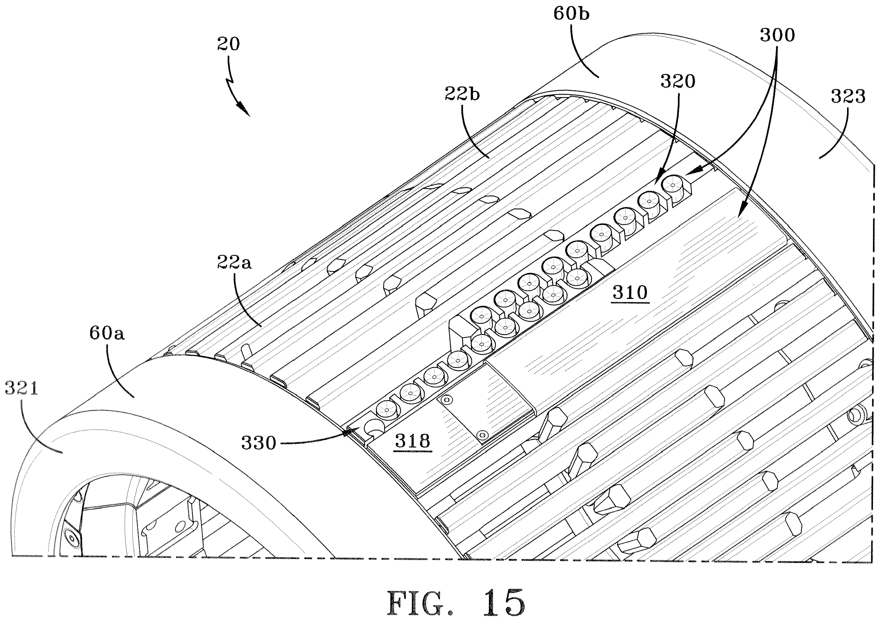

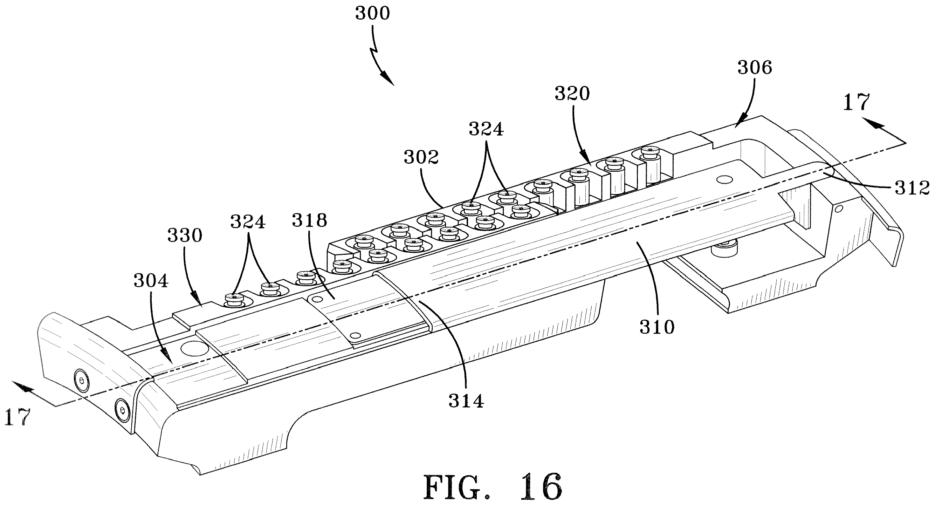

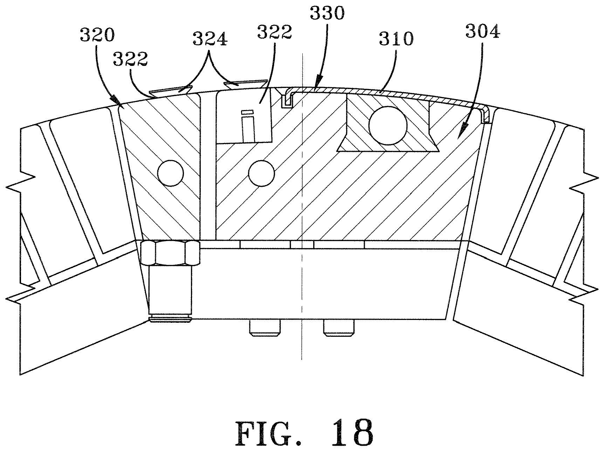

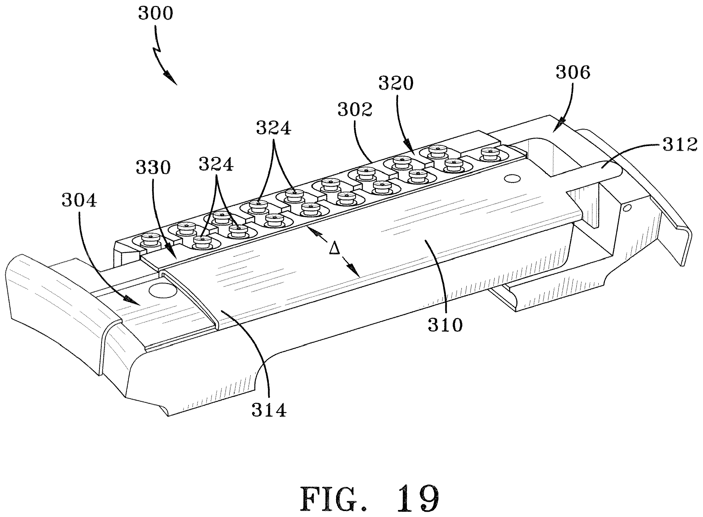

Figures 15-18 illustrate an embodiment of a splice bar segment 300 with vacuum in accordance with the invention. In this embodiment, the segment 103 is replaced with the splice bar segment 300 on the tire building drum 5, as shown in Figure 15. Unlike the segment 103, the splice bar 300 has a full axial width of the center section 20. Thus the splice bar extends from one axial end 321 to the opposite axial end 323 of the center section 20. Because the center section axially contracts as shown in Figure 19, the slice bar 300 also axially contracts.

### Splice Bar Assembly

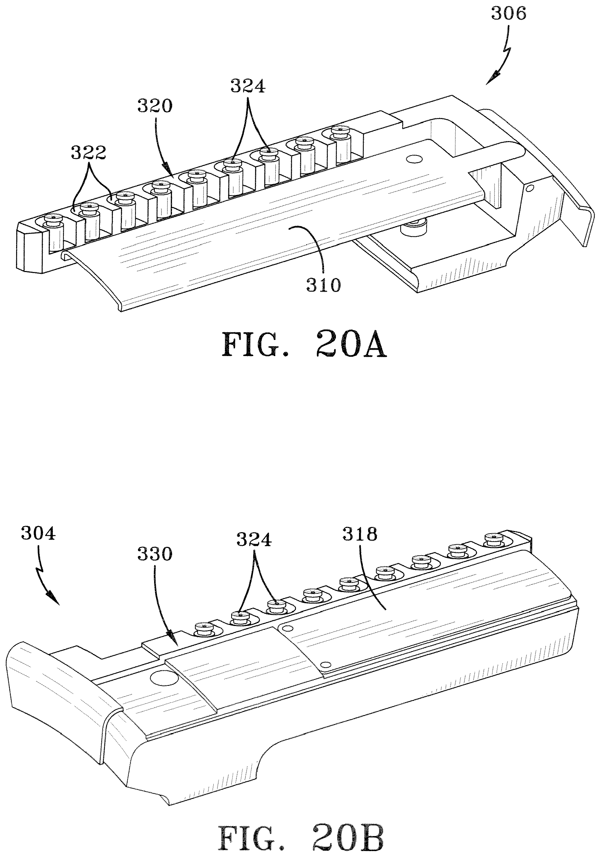

The splice bar 300 has a frame 302 having a left side 304 and a right side 306 that are slidable relative to each other, so that the splice bar 300 may axially expand or contract. As shown in Figure 20a, the right side or first side frame 306 includes a rigid splice plate 310 and a vacuum bar 320 having a plurality of vacuum holes 322. The vacuum bar 320 is circumferentially spaced apart from the rigid splice plate forming a circumferential gap so that a second vacuum bar 330 connected to the left side or second side frame 304 may be received therein. Figure 20b illustrates the second side frame 304, which further includes a support plate 318 that is received under the rigid splice plate 310. Preferably received in each vacuum hole is a resilient suction cup 324. The resilient suction cups 324 are preferably formed of elastomer, rubber, silicone or other resilient material. The vacuum suction cups protrude from the vacuum holes 322 of the vacuum bars 320, 330. The vacuum suction cups provide a larger surface area and better seal between the innerliner stock and the suction cups due to the resiliency and larger surface area. Preferably, there are 6-14 vacuum cups per vacuum bar 320, 330.

The rigid splice plate 310 provides a surface having a sufficient radial depth D for supporting the leading edge of a tire component thereon, as well as providing a rigid surface support to allow the tire component to be spliced. The rigid splice plate 310 has a first end that is preferably pivotally mounted to the right side 306 of the splice bar 300 at point 316. The rigid splice plate 310 has a free end 314 that is slidable over outer surface 318 of the left side 304 when the splice bar 300 axially contracts as shown in Figure 19.

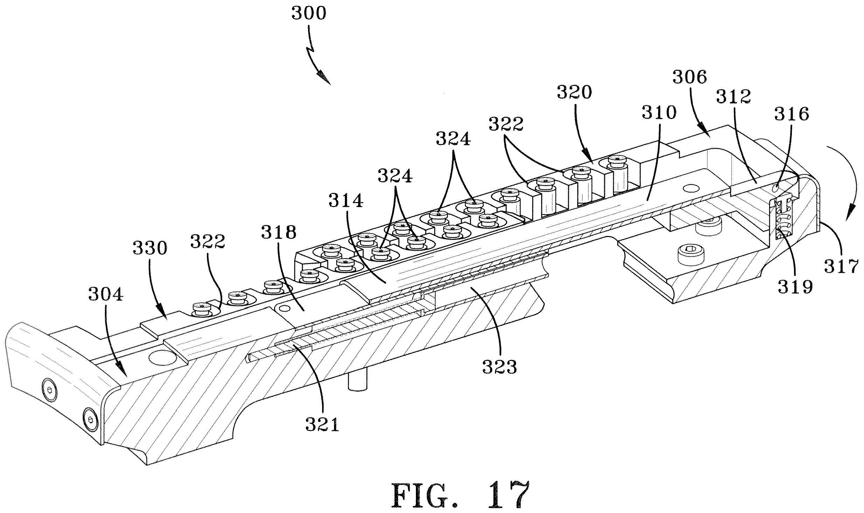

Figure 17 illustrates a cutaway view of the splice bar 300. The splice plate 310 is rotatable about pivot point 316 in the direction shown in arrow 317. Preferably, a compression spring 319 biases the spring in the closed position as shown. In the case of interference, the splice plate 310 will rotate about pivot point 316 so that the splice plate moves out of the way. The splice bar 300 preferably further includes a second compression spring 321 that slides in sleeve 323. The second compression spring is preferably oriented in the axial direction, and biases the splice bar 300 in the axially open position as shown.

### Bead Lock Mechanism

Adjacent the center section 20 are first and second annular bead locking mechanisms 25. The bead lock mechanisms are radially expandable into a bead clamp position in order to secure the bead during the tire building process. Figure 2 illustrates the bead locking mechanisms 25 in the retracted position.

### Shoulder Section and Shoulder Clamp Lock

The right and left hand shoulder section 29 of the tire building drum 5 is defined as the drum components located axially outward of the centerline of the center section, inclusive of the seal clamps and the bead lock mechanisms. The left and right hand shoulder sections of the tire building drum are axially slidable preferably on bearing sleeves. The shoulder sections 29 are preferably actuated by drive pins 125 mounted on nuts 130, which ride along drive screw 121. When the central screw is rotated, the nuts 130 move axially inward/outward, causing the drive pins 125 and each shoulder section to move axially inward/outward in corresponding fashion. In addition, the drive pins are also in mechanical cooperation with the split center segments, causing the split center segments 22a, 22b to axially extend or contract.

When the center section 20 of the tire building drum 5 moves into the high crown position as shown in Figure 2, the bead lock mechanisms 25 and the seal clamp mechanism 70 are further actuated axially inward so that seal clamp is received in recess 74. The axial actuation of the bead lock mechanisms and seal clamps preferably occurs simultaneously with the movement of the center segments into the high crown position.

### Drive Shaft

A central drive shaft 120 is provided for rotational movement of the tire building drum 5 about its longitudinal axis. The central shaft 120 is connected to a drive means (not shown). Provided within the central drive shaft 120 is a central screw 121. The central screw 121 is supported at each end by bearings 123. The threads on one side of the central screw 121 are left handed and on the opposite side are right handed. On the left hand side is an inboard nut 125 connected to the one end of the threaded screw 121 and similarly on the opposite right hand side is an outboard ball nut 125 connected to the central screw 121.

### Turn Up Bladders

An upper bladder 150 extends axially outward from the bead lock mechanism 25 to the respective ends of the tire building drum. The upper bladder 150 extends over a lower bladder 152, which is mounted in the shoulder area of the drum and extends axially outward to the respective ends of the tire building drum. The upper and lower bladders function as turnup bladders which are used to inflate and, thereby, make the turn-up ends of the ply wrap about the apex and bead cores.

## Claims

1. A tire building drum comprising a rotatable drum (5) having a center section (20) and a first and second shoulder section (29), said center section (20) being radially expandable, wherein said center section (20) has a first shoulder (22a), a second shoulder (22b) and a center portion extending between the first and second shoulder, wherein the center section (20) further comprising a first half and a second half, wherein the first half and the second half are axially movable with respect to each other, and wherein the center section (20) comprises a rigid splice bar assembly (300) comprising a rotatable splice plate (310) and a plurality of holes (322) in fluid communication with a vacuum source, **characterized in that** a resilient suction cup (324) is positioned in a respective hole (322), wherein the suction cup (324) has a hole for communicating vacuum fluid, and **in that** the resilient suction cup (324) protrudes from the hole (322).

2. The tire building drum of claim 1 wherein the splice plate (310) is rotatable about a direction transverse to the axial direction.

3. The tire building drum of at least one of the previous claims wherein the splice plate (310) is pivotable about one end.

4. The tire building drum of at least one of the previous claims wherein the center portion (20) has no center sleeve.

5. The tire building drum of at least one of the previous claims wherein the center section (20) further comprises a plurality of first half segments and a plurality of second half segments, wherein the first half segments are axially slidably relative to the second half segments.

6. The tire building drum of at least one of the previous claims wherein the center section (20) further comprises a first and second shoulder seal (60a, 60b) positioned on the first and second shoulder, respectively.

7. The tire building drum of at least one of the previous claims wherein the rigid splice bar assembly (300) is axially collapsible.

8. The tire building drum of at least one of the previous claims wherein a spring biases the rigid splice bar assembly (300) into an axially open position.

9. The tire building drum of at least one of the previous claims wherein a compression spring biases the rotatable splice plate (310) into a closed position.

## Patentansprüche

1. Reifenbautrommel, umfassend eine rotierbare Trommel (5), die einen zentralen Abschnitt (20) und einen ersten und einen zweiten Schulterabschnitt (29) aufweist, wobei der zentrale Abschnitt (20) radial aufweitbar ist, wobei der zentrale Abschnitt (20) eine erste Schulter (22a), eine zweite Schulter (22b) und einen sich zwischen der ersten und der zweiten Schulter erstreckenden zentralen Teil aufweist, wobei der zentrale Abschnitt (20) weiter eine erste Hälfte und eine zweite Hälfte umfasst, wobei die erste Hälfte und die zweite Hälfte in Bezug zueinander axial bewegbar sind, und wobei der zentrale Abschnitt (20) eine starre Spleißleistenanordnung (300) umfasst, die eine rotierbare Spleißplatte (310) und eine Vielzahl von Löchern (322) in Fluidverbindung mit einer Vakuumquelle umfasst, **dadurch gekennzeichnet, dass** ein elastischer Saugnapf (324) in einem jeweiligen Loch (322) positioniert ist, wobei der Saugnapf (324) ein Loch zum Leiten von Vakuumfluid aufweist, und dadurch, dass der elastische Saugnapf (324) aus dem Loch (322) ragt.

2. Reifenbautrommel nach Anspruch 1, wobei die Spleißplatte (310) um eine Richtung quer zur axialen Richtung rotierbar ist.

3. Reifenbautrommel nach mindestens einem der vorhergehenden Ansprüche, wobei die Spleißplatte (310) um ein Ende schwenkbar ist.

4. Reifenbautrommel nach mindestens einem der vorhergehenden Ansprüche, wobei der zentrale Teil (20) keine zentrale Hülse aufweist.

5. Reifenbautrommel nach mindestens einem der vorhergehenden Ansprüche, wobei der zentrale Abschnitt (20) weiter eine Vielzahl erster Halbsegmente und eine Vielzahl zweiter Halbsegmente umfasst, wobei die ersten Halbsegmente in Bezug zu den zweiten Halbsegmenten axial verschiebbar sind.

6. Reifenbautrommel nach mindestens einem der vorhergehenden Ansprüche, wobei der zentrale Abschnitt (20) weiter eine an der ersten beziehungsweise der zweiten Schulter angeordnete erste und zweite Schulterdichtung (60a, 60b) umfasst.

7. Reifenbautrommel nach mindestens einem der vorhergehenden Ansprüche, wobei die starre Spleißleistenanordnung (300) axial einklappbar ist.

8. Reifenbautrommel nach mindestens einem der vorhergehenden Ansprüche, wobei eine Feder die starre Spleißleistenanordnung (300) in eine axial offene Position vorspannt.

9. Reifenbautrommel nach mindestens einem der vorhergehenden Ansprüche, wobei eine Druckfeder die rotierbare Spleißplatte (310) in eine geschlossene Position vorspannt.

## Revendications

1. Tambour de confection de bandage pneumatique comprenant un tambour rotatif (5) possédant un tronçon central (20) et un premier et un second tronçon (29) faisant office d'épaulement, ledit tronçon central (20) étant à même de se déployer en direction radiale ; dans lequel ledit tronçon central (20) possède un premier épaulement (22a), un second épaulement (22b) et une portion centrale s'étendant entre le premier et le second épaulement ; dans lequel le tronçon central (20) comprend en outre une première moitié et une seconde moitié ; dans lequel la première moitié et la seconde moitié sont mobiles en direction axiale l'une par rapport à l'autre ; et dans lequel le tronçon central (20) comprend un assemblage de barre de raccordement rigide (300) comprenant une plaque de raccordement rotative (310) et plusieurs trous (322) en communication par fluide avec une source de vide ; **caractérisé en ce qu'**une ventouse résiliente (324) est disposée dans un trou respectif (322) ; dans lequel la ventouse (324) possède un trou pour la communication d'un fluide sous forme de vide ; et **en ce que** la ventouse résiliente (324) fait faillite par rapport au trou (322).

2. Tambour de confection de bandage pneumatique selon la revendication 1, dans lequel la plaque de raccordement (310) est rotative autour d'une direction transversale par rapport à la direction axiale.

3. Tambour de confection de bandage pneumatique selon au moins une des revendications précédentes, dans lequel la plaque de raccordement (310) est à même de pivoter autour d'une extrémité.

4. Tambour de confection de bandage pneumatique selon au moins une des revendications précédentes, dans lequel la portion centrale (20) ne possède aucun manchon central.

5. Tambour de confection de bandage pneumatique selon au moins une des revendications précédentes, dans lequel la portion centrale (20) comprend en outre plusieurs premiers demi-segments et plusieurs seconds demi-segments, dans lequel les premiers demi-segments sont à même de coulisser en direction axiale par rapport aux seconds demi-segments.

6. Tambour de confection de bandage pneumatique selon au moins une des revendications précédentes, dans lequel la portion centrale (20) comprend en outre un premier et un second joint d'étanchéité d'épaulement (60a, 60b) disposés sur le premier et le second épaulement, respectivement.

7. Tambour de confection de bandage pneumatique selon au moins une des revendications précédentes, dans lequel l'assemblage de barre de raccordement rigide (300) est à même de s'affaisser en direction axiale.

8. Tambour de confection de bandage pneumatique selon au moins une des revendications précédentes, dans lequel un ressort met l'assemblage de barre de raccordement rigide (300) en état de précontrainte dans une position ouverte en direction axiale.

9. Tambour de confection de bandage pneumatique selon au moins une des revendications précédentes, dans lequel un ressort de compression met la plaque de raccordement rotative (310) en état de précontrainte dans une position fermée.
